# NEUE EUROPÄISCHE PATENTSCHRIFT

(11) **EP 3 354 892 B2**
(45) Veröffentlichungstag und Bekanntmachung des Hinweises auf die Entscheidung über den Einspruch: **22.11.2023**
(45) Hinweis auf die Patenterteilung: 29.04.2020
(21) Anmeldenummer: 17400005.9
(22) Anmeldetag: 30.01.2017
(51) Int. Cl.: F02N 11/08, F02N 11/10, B27B 17/08, F02B 63/02

(54) **HANDGEFÜHRTES ARBEITSGERÄT MIT EINEM VERBRENNUNGSMOTOR UND EINER ELEKTRISCHEN STARTVORRICHTUNG**
HAND-GUIDED WORKING TOOL WITH A COMBUSTION ENGINE AND AN ELECTRIC STARTING DEVICE
OUTIL DE TRAVAIL PORTATIF COMPRENANT UN MOTEUR À COMBUSTION ET UN DISPOSITIF DE DÉMARRAGE ÉLECTRIQUE

(43) Veröffentlichungstag der Anmeldung: 01.08.2018
(73) Patentinhaber: Andreas Stihl AG & Co. KG, 71336 Waiblingen (DE)
(72) Erfinder: Gorenflo, Ernst, 74906 Heinsheim (DE)
(74) Vertreter: Wasmuth, Rolf

(56) Entgegenhaltungen:
- EP-A1- 2 087 973
- EP-A1- 2 335 469
- EP-A2- 2 305 439
- EP-A2- 2 305 439
- EP-A2- 2 679 801
- WO-A1-2012/002888
- DE-U- 1 979 925
- DE-U1-202014 100 966
- GB-A- 2 063 635
- SE-B- 449 455
- US-A1- 2009 193 669
- US-A1- 2011 146 610
- US-A1- 2013 111 865
- US-A1- 2013 111 865
- US-A1- 2014 005 001

## Beschreibung

Die Erfindung betrifft eine Motorkettensäge mit einem Verbrennungsmotor und einer elektrischen Startvorrichtung zum Starten des Verbrennungsmotors. Die Startvorrichtung weist einen Elektromotor als Anlassermotor auf und umfasst eine Ansteuervorrichtung, über die der Elektromotor in Betrieb genommen wird, um den Verbrennungsmotor zu starten, wenn vorgegebene Bedingungen zum Anwerfen des Verbrennungsmotors erfüllt sind. Zum Starten des Verbrennungsmotors ist vorgesehen, eine Bremsvorrichtung zum Stillsetzen des Werkzeugs einzulegen, wobei die Bremsvorrichtung über einen Betätigungshebel zu bedienen ist. Der Betätigungshebel ist zur Aktivierung oder Deaktivierung der Bremsvorrichtung aus einer ersten Lage, z. B. einer Ausgangslage, in mindestens eine weitere Lage zu bewegen, wobei der Betätigungshebel infolge der Bewegung aus der ersten Lage in die weitere Lage einen Signalgeber betätigt, und der Signalgeber ein Signal an die Ansteuervorrichtung abgibt.

Aus der EP 2 087 973 A1 ist ein handgeführtes, tragbares Arbeitsgerät mit einem Betätigungshebel für eine Sicherheitsbremseinrichtung bekannt, bei der ein Sensor zur Erkennung der Stellung des Betätigungshebels vorgesehen ist. Der Sensor zeigt eine geöffnete Sicherheitsbremse an. Bei geöffneter Sicherheitsbremse kann der Betätigungshebel in weitere Lagen verstellt werden, ohne dass der Sensor anspricht. Der Sensor meldet den Zustand der Sicherheitsbremseinrichtung, um festzustellen, ob ein Starten des Verbrennungsmotors zugelassen ist.

Aus der US 2013/0111865 A1 ist ein Rasenmäher mit einem Griffbügel einer Totmannschaltung bekannt, bei dem durch Anziehen des Griffbügels ein Starten des Verbrennungsmotors über einen elektrischen Anlasser erfolgt.

Die Voraussetzungen zum elektrischen Starten des Verbrennungsmotors in einem handgeführten, tragbaren Arbeitsgerät erfordern vorgegebene Startbedingungen, wodurch im praktischen Betrieb der Vorteil des elektrischen Anlassens des Verbrennungsmotors häufig beeinträchtigt ist.

Der Erfindung liegt die Aufgabe zugrunde, ein tragbares, handgeführtes Arbeitsgerät mit einem Verbrennungsmotor und einer elektrischen Startvorrichtung für den Verbrennungsmotor derart auszubilden, dass der Benutzer den Verbrennungsmotor über die Startvorrichtung mit wenigen Handgriffen wiederholt sicher starten kann.

Die Aufgabe wird erfindungsgemäß dadurch gelöst, dass die Ansteuervorrichtung in Abhängigkeit von dem Signal des Signalgebers ein Startsignal zur Inbetriebnahme des Elektromotors und zum Starten des Verbrennungsmotors abgibt, wenn die vorgegebene weitere Lage erkannt ist.

Zur Inbetriebnahme des Verbrennungsmotors ist regelmäßig vorgesehen, dass zunächst die Bremsvorrichtung zum Stillsetzen des Werkzeugs eingelegt sein muss. Der Benutzer wird daher - wie es dem sicheren Arbeitsablauf entspricht - den Betätigungshebel der Bremsvorrichtung betätigen, um sichere Voraussetzungen für einen Start des Verbrennungsmotors zu schaffen. Nach der Erfindung ist nun vorgesehen, an dem Betätigungshebel einen Signalgeber anzuordnen, der die Schwenklage des Betätigungshebels erfasst und an die Ansteuervorrichtung meldet. Dadurch kann die Ansteuervorrichtung erkennen, ob der Betätigungshebel aus seiner ersten Lage in eine weitere Lage verschwenkt wurde. Daraus kann in einer Steuereinrichtung abgeleitet werden, ob ein Anlassen des Verbrennungsmotors sicher möglich ist. Wird eine erste Lage zum Starten des Verbrennungsmotors erkannt, schließt die Ansteuervorrichtung einen Anlasserschalter zur Inbetriebnahme des Elektromotors zwecks Anwerfen des Verbrennungsmotors. Ohne weitere oder zusätzliche Handgriffe kann der Benutzer den Verbrennungsmotor sicher starten und das Arbeitsgerät in Betrieb nehmen. Vorzugsweise ist die erfindungsgemäße Startvorrichtung zum sicheren Wiederstarten des Verbrennungsmotors vorgesehen und zweckmäßig hierzu ausgelegt.

Wiederstarten bedeutet, dass der Verbrennungsmotor innerhalb kurzer Zeit nach einem Abschalten erneut gestartet wird, beispielsweise innerhalb einer Zeitspanne von 30 Sekunden. Für einen Wiederstart muss die Maschine bereits erfolgreich gestartet worden sein; solch ein erfolgreicher Start kann in der Steuereinrichtung entsprechend zwischengespeichert werden. Vorzugsweise erfolgt ein Wiederstarten bei warmer Maschine. Um dies zu erfassen, kann eine Betriebsdauer der Maschine oder die

Temperatur als Information von einem Thermoelement in einem Steuergerät erfasst werden.

In Weiterbildung der Erfindung entspricht die weitere Lage einer ersten oder zweiten Zwischenlage des Betätigungshebels, in der der Betätigungshebel um einen vorgegebenen Stellweg aus der ersten Lage, vorzugsweise einer Ausgangsstellung, ausgelenkt ist. Der Signalgeber kann hierzu als Drehwinkelgeber ausgebildet sein, so dass die Ansteuervorrichtung zu jedem Zeitpunkt anhand des Drehwinkels des Betätigungshebels dessen Lage erkennen kann, um zu entscheiden, ob ein Startsignal an den Elektromotor als Anlassermotor zulässig ist oder nicht.

Zweckmäßig kann die weitere Lage einer ersten oder zweiten Endlage des Betätigungshebels entsprechen, in der der Betätigungshebel um einen maximalen Stellweg aus der ersten Lage ausgelenkt ist. Es kann vorteilhaft sein, der ersten oder zweiten Endlage einen Stellungssensor zuzuordnen. Die Auslegung kann so vorgesehen sein, dass der Stellungssensor dann anspricht und ein Signal an die Ansteuervorrichtung abgibt, wenn der Betätigungshebel in der ersten oder zweiten Endlage an einem Endanschlag anliegt.

Es kann vorteilhaft sein, den Signalgeber als Drehwinkelgeber auszubilden, der ein dem Drehwinkel des Betätigungshebels proportionales Signal an die Ansteuervorrichtung abgibt. Zweckmäßig ist der Signalgeber als Endsignalgeber ausgebildet, d. h. der Signalgeber gibt am Ende des Stellwegs ein Signal an die Ansteuervorrichtung ab. Der Signalgeber kann auch als Kombination aus Drehwinkelgeber und Endsignalgeber ausgebildet sein.

Vorteilhaft ist in der ersten Zwischenlage des Betätigungshebels die Bremsvorrichtung gelöst. Es kann auch zweckmäßig sein, dass in der zweiten Zwischenlage des Betätigungshebels die Bremsvorrichtung angelegt ist. Bei eingelegter Bremsvorrichtung kann es zweckmäßig sein, ein Wiederstarten des Verbrennungsmotors auch durch Tasten bzw. Niederdrücken einer Gashebelsperre auszulösen. Ein Wiederstarten des Verbrennungsmotors kann auch durch Niederdrücken des Gashebels ausgelöst werden, vorzugsweise erst nach Betätigen der Gashebelsperre.

Stellt die Ansteuervorrichtung ein vorgegebenes Signal des Signalgebers fest, nimmt die Ansteuervorrichtung den Elektromotor zum Starten des Verbrennungsmotors nur dann in Betrieb, wenn über das vorgegebene Signal des Signalgebers hinaus ein vorgegebener Betriebszustand des Arbeitsgerätes erkannt ist.

Der Elektromotor wird vorzugsweise mit Energie aus einem Akku versorgt, beispielsweise aus einem Lithium-Ionen Akku. Der oder die Akkus können fest in dem handgetragenen Arbeitsgerät verbaut sein. Vorteilhaft ist vorgesehen, die Akkus während dem Betrieb des Verbrennungsmotor durch einen Generator zu laden.

Ein vorgegebener Betriebszustand ist ein erfolgreicher, abgeschlossener erster Start des Verbrennungsmotors, z. B. ein manueller Start des Verbrennungsmotors mit einem Seilzugstarter. Alternativ kann auch ein elektrisches Starten per Startknopf oder mittels eines Zündschlüssels vorgesehen sein. Der vorgegebene Betriebszustand kann auch darin bestehen, dass ein Leerlaufbetrieb des Verbrennungsmotors für einen vorgegebenen Zeitraum festgestellt ist.

In besonderer Weiterbildung der Erfindung wird durch das Signal des Signalgebers eine elektronisch verriegelte Sperrvorrichtung freigeschaltet.

Ein Starten des Verbrennungsmotors ist vorteilhaft dann möglich, wenn eine einem Gashebel des Verbrennungsmotors zugeordnete Gashebelsperre vom Benutzer gedrückt ist und der Betätigungshebel in eine weitere Lage verschwenkt ist, z. B. durch Antippen durch den Benutzer. Die Hand des Benutzers an der Gashebelsperre und die weitere Hand des Benutzers zum Tasten des Betätigungshebels stellen im weiteren Sinne eine Zweihandsicherung dar. Der Start des Verbrennungsmotors ist nur möglich, wenn beide Hände des Benutzers an vorgegebenen Stellen des Arbeitsgerätes detektiert werden. Erst dann wird die Ansteuervorrichtung den Elektromotor zum Starten des Verbrennungsmotors in Betrieb nehmen.

Ein Starten des Verbrennungsmotors ist vorteilhaft möglich, wenn ein Gashebel des Verbrennungsmotors gedrückt und der Betätigungshebel in eine weitere Lage verstellt wird. Die Ansteuervorrichtung wird den Elektromotor dann zum Starten des Verbrennungsmotors in Betrieb nehmen.

Die in den Ansprüchen angegebenen Merkmale sowie die in der nachfolgenden Beschreibung genannten Merkmale können selbstständig genutzt sein oder untereinander kombiniert werden, insbesondere beliebig kombiniert werden.

Weitere Merkmale der Erfindung ergeben sich aus den weiteren Ansprüchen, der Beschreibung und der Zeichnung, in denen nachfolgend im Einzelnen beschriebene Ausführungsbeispiele der Erfindung dargestellt sind. Es zeigen:
- Fig. 1: in schematischer Darstellung ein Arbeitsgerät am Bespiel einer Motorkettensäge mit einem Verbrennungsmotor und einem Handschutz als Betätigungshebel für eine Bremsvorrichtung zum Stillsetzen eines Werkzeugs,
- Fig. 2: in schematischer Darstellung ein Prinzipschaltbild zum Starten des Verbrennungsmotors mit einem Elektromotor als Anlassermotor durch Verschwenken des Betätigungshebels der Bremsvorrichtung entgegen dem Uhrzeigersinn,
- Fig. 3: eine schematische Darstellung eines Arbeitsgerätes entsprechend Fig. 1 mit einem zum Starten des Verbrennungsmotors im Uhrzeigersinn zu verschwenkenden Betätigungshebel der Bremsvorrichtung,
- Fig. 4: in schematischer Darstellung ein erweitertes Prinzipschaltbild zum Starten des Verbrennungsmotors durch einen Elektromotor mittels Verschwenken des Betätigungshebels der Bremsvorrichtung im oder entgegen dem Uhrzeigersinn.

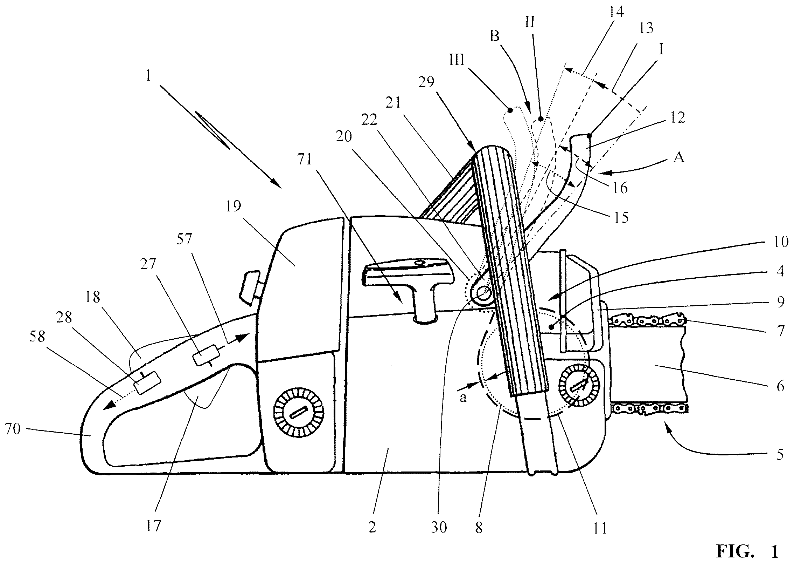

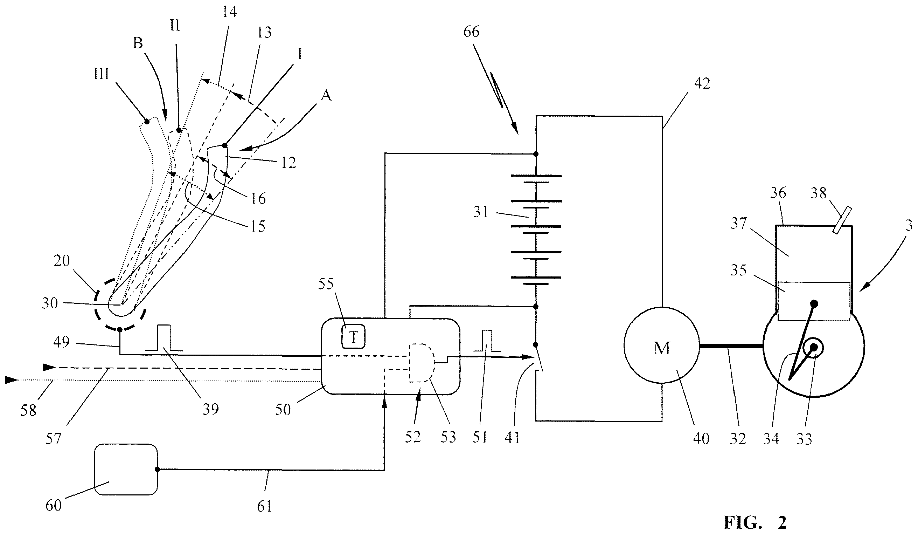

Das Arbeitsgerät kann ein tragbares Arbeitsgerät wie eine Motorkettensäge, eine Heckenschere, ein Freischneider oder dgl. Arbeitsgerät sein. In Fig. 1 ist das dargestellte Arbeitsgerät eine Motorkettensäge 1 mit einem an sich bekannten Grundaufbau. Im Gehäuse 2 der Motorkettensäge 1 ist ein Verbrennungsmotor 3 (Fig. 2) angeordnet, der über eine Kupplung 4 ein Werkzeug 5 antreibt. Im gezeigten Ausführungsbeispiel ist das Werkzeug 5 eine auf einer Führungsschiene 6 umlaufende Sägekette 7. Die Kupplung 4 ist bevorzugt eine Fliehkraftkupplung mit einer Kupplungstrommel 8, welche über ein drehfest mit der Kupplungstrommel 8 verbundenes Antriebsrad das Werkzeug 5 antreibt.

Das Arbeitsgerät weist eine Bremsvorrichtung 10 auf, die im gezeigten Ausführungsbeispiel auf die Kupplungstrommel 8 wirkt. Wie in Fig. 1 gezeigt, ist die Kupplungstrommel 8 von einem Bremsband 11 umschlungen. Wird das Bremsband 11 an die Kupplungstrommel 8 angelegt, kommt diese in Sekundenbruchteilen zum Stehen; da das Antriebsrad des Werkzeugs 5 mit der Kupplungstrommel 8 drehfest verbunden ist, wird dieses - zusammen mit dem Werkzeug 5 - in Sekundenbruchteilen bis zum Stillstand abgebremst. Bei aktiver Bremsvorrichtung 10 liegt das Bremsband 11 an der Kupplungstrommel 8 an. Durch eine aktive Bremsvorrichtung 10 wird verhindert, dass das Werkzeug 5 angetrieben wird.

In der in Fig. 1 dargestellten Lösestellung der Bremsvorrichtung 10 liegt das Bremsband 11 mit geringem Abstand a zur Umfangswand der Kupplungstrommel 8; in dieser Lösestellung gemäß Fig. 1 kann die Kupplungstrommel 8 frei drehen und das Werkzeug 5 antreiben. Die Bremsvorrichtung 10 ist nicht aktiv.

Das vordere Ende des Gehäuses 2 weist die Führungsschiene 6 mit dem Werkzeug 5 auf. An dem anderen, hinteren Ende des Gehäuses 2 ist ein hinterer Handgriff 70 mit Bedienelementen zum Steuern des Verbrennungsmotors 3 (Fig. 2) vorgesehen. Ein erstes Bedienelement ist durch einen Gashebel 17 gebildet, dem als zweites Bedienelement eine Gashebelsperre 18 zugeordnet ist.

Der hintere Handgriff 70 liegt im Wesentlichen in Längsrichtung der Motorkettensäge 1 ausgerichtet am hinteren Ende des Gehäuses 2. Im Bereich des hinteren Handgriffs 70 des Gehäuses 2 ist ein Luftfilter 19 zur Filterung der Verbrennungsluft für den im Gehäuse 2 angeordneten Verbrennungsmotors 3 angeordnet.

Die Motorkettensäge 1 weist ferner einen vorderen Handgriff 29 auf, der von einem Griffbügel gebildet ist. Der Griffbügel überspannt den vorderen Abschnitt des Gehäuses 2. Der Griffbügel weist einen seitlichen Griffabschnitt und einen das Gehäuse überspannenden oberen Griffabschnitt 21 auf. Zwischen dem oberen Griffabschnitt 21 des Griffbügels 29 und einem Schalldämpfer 9 am vorderen Ende des Gehäuses 2 ist ein Betätigungshebel 12 vorgesehen, über den die Bremsvorrichtung 10 zu betätigen ist. Bei einer Motorkettensäge 1 gemäß dem Ausführungsbeispiel nach Fig. 1 bildet der Betätigungshebel 12 einen Auslöser für die Bremsvorrichtung 10 und dient als Handschutz, der vor dem oberen Griffabschnitt 21 des vorderen Handgriffs 29 vorgesehen ist.

In den Figuren 1 und 2 ist die erste Lage A des Betätigungshebels 12 in durchgezogener Linie wiedergegeben. Die erste Lage A entspricht einer Ausgangsstellung I des Betätigungshebels 12. In der ersten Lage A des Betätigungshebels 12 kann die Bremsvorrichtung 10 aktiv oder auch inaktiv sein.

In der Darstellung nach den Figuren 1 und 2 ist die Bremsvorrichtung 10 inaktiv dargestellt, d. h., das Bremsband 11 liegt zur Kupplungstrommel 8 mit einem Abstand a. Der Betätigungshebel 12 liegt in einer ersten Lage A. Zum Starten des Verbrennungsmotors 3 wird der Betätigungshebel 12 aus der ersten Lage A in Richtung des Pfeils 13 auf den oberen Griffabschnitt 21 des Griffbügels 29 zu bewegt, wobei der Betätigungshebel 12 um eine Schwenkachse 30 entgegen dem Uhrzeigersinn verschwenkt und eine weitere Lage B einnimmt.

Die weitere Lage B des Betätigungshebels 12 kann sowohl eine erste Zwischenlage II des Betätigungshebels 12 als auch eine erste Endlage III des Betätigungshebels 12 sein.

Nach dem Durchfahren eines Schwenkweges 16 aus der ersten Lage A wird zunächst die erste Zwischenlage II erreicht, die in den Figuren 1 und 2 strichliert dargestellt ist. Wird der Betätigungshebel 12 über die strichlierte erste Zwischenlage II hinaus weiter in Pfeilrichtung 14 auf den Griffbügel 29 zu verschwenkt, gelangt er nach dem Durchfahren eines Schwenkweges 15 in die erste Endlage III (punktiert dargestellt). Über seinen Schwenkweg 15 aus der ersten Lage A in die erste Endlage III durchfährt der Betätigungshebel 12 die erste Zwischenlage II.

In der Darstellung nach Fig. 1 kann die Bremsvorrichtung 10 auch aktiv sein, das Bremsband 11 also an der Kupplungstrommel 8 anliegen. Ist die Bremsvorrichtung 10 aktiv, wird zum Lösen der Bremsvorrichtung 10 der Betätigungshebel 12 aus seiner ersten Lage A in Richtung auf den oberen Griffabschnitt 21 des vorderen Griffbügels 29 bzw. in Richtung zum Luftfilter 19 verschwenkt. Die Auslegung kann so getroffen-sein, dass mit Erreichen der ersten Zwischenlage II des Betätigungshebels 12 die Bremsvorrichtung 10 gelöst ist. Nach Lösen der Bremsvorrichtung 10 kann der Benutzer den Betätigungshebel 12 loslassen; dieser wird - vorzugsweise durch Federkraft - entgegen Pfeilrichtung 13 selbsttätig in die erste Lage A zurückgestellt. Wird der Betätigungshebel 12 hingegen weiter in Pfeilrichtung 14 verschwenkt, wird die erste Endlage III des Betätigungshebels 12 erreicht. Der Betätigungshebel 12 kann somit aus einer ersten Lage A in eine weitere Lage B (erste Zwischenlage II oder erste Endlage III) verschwenkt werden.

Dem Betätigungshebel 12 ist ein Signalgeber 20 (Figuren 1, 2) zugeordnet. Der Signalgeber 20 erfasst die Bewegung des Betätigungshebels 12. Vorteilhaft ist der Signalgeber 20 am unteren Ende 22 des Betätigungshebels 12 angeordnet. Der Signalgeber 20 ist insbesondere im Bereich der Schwenkachse 30 vorgesehen. Der Signalgeber 20 erfasst vorteilhaft die Drehbewegung des Betätigungshebels 12 um die Schwenkachse 30. Vorteilhaft erfasst der Signalgeber 20 die Richtung der Drehbewegung und/oder den Drehwinkel der Drehbewegung. Zweckmäßig ist der Signalgeber 20 als Drehwinkelgeber ausgebildet, der ein dem Drehwinkel des Betätigungshebels 12 proportionales Signal 39 an eine Ansteuervorrichtung 50 (Fig. 2) abgibt. Auch kann der Signalgeber 20 als Endsignalgeber ausgebildet sein, d. h. der Signalgeber 20 gibt am Ende des Stellwegs 15 ein Signal ab. Der Signalgeber 20 kann auch als Kombination aus Drehwinkelgeber und Endsignalgeber ausgebildet sein.

Vorteilhaft ist der Signalgeber 20 ein berührungsloser Signalgeber oder als elektromechanische Schaltvorrichtung ausgebildet, z. B. als Endschalter.

Wie Fig. 1 ferner zeigt, ist der Gashebelsperre 18 ein Stellungssensor 28 und dem Gashebel 17 ein weiterer Stellungssensor 27 zugeordnet. Die Signalleitungen 57, 58 der Stellungssensoren 27, 28 sind zweckmäßig mit der Ansteuervorrichtung 50 (Fig. 2) verbunden. Die Ansteuervorrichtung 50 ist zur Auswertung der Ausgangssignale der Stellungssensoren 27, 28 ausgebildet.

Wie in Fig. 2 wiedergegeben, ist die Startvorrichtung 66 zum Starten des im Gehäuse 2 angeordneten Verbrennungsmotors 3 (Fig. 2) über einen Elektromotor 40 als elektrischer Anlasser ausgebildet, wobei der Elektromotor 40 mit einer elektrischen Energiequelle zu verbinden ist. Die Energiequelle ist vorzugsweise von einem Akkupack 31 gebildet. Der Elektromotor 40 wird von einem Anlasserschalter 41 betätigt, der im Stromkreis 42 des Elektromotors 40 vorgesehen ist und den Stromkreis 42 öffnet oder schließt.

Wie Fig. 2 schematisch wiedergibt, steht der Elektromotor 40 über eine mechanische Antriebsverbindung 32 mit der Kurbelwelle 33 des Verbrennungsmotors 3 in Verbindung. Über ein Pleuel 34 wird die Auf- und Abbewegung eines in einem Zylinder 36 geführten Kolbens 35 auf die Kurbelwelle 33 übertragen. Dem im Zylinder 36 ausgebildeten Brennraum 37 ist eine Zündkerze 38 zugeordnet, die im Betrieb ein in den Brennraum 37 angesaugtes Kraftstoff/Luft-Gemisch zündet und den Kolben 35 zum Antrieb der Kurbelwelle 33 antreibt. Bevorzugt ist der Verbrennungsmotor 3 ein Zweitaktmotor, insbesondere ein Spülvorlagenmotor, ein gemischgeschmierter Viertaktmotor oder dgl. Verbrennungsmotor.

Das Ausgangssignal des am Betätigungshebel 12 angeordneten Signalgebers 20 ist vorteilhaft über eine Signalleitung 49 der Ansteuervorrichtung 50 zugeführt, dessen Ausgangssignal als Startsignal 51 den Anlasserschalter 41 steuert.

Nach der Erfindung wird über den Signalgeber 20 in Fig. 1 eine Bewegung des Betätigungshebels 12 aus einer ersten Lage A in eine weitere Lage B erkannt. Diese weitere Lage B kann die erste Zwischenlage II oder die erste Endlage III sein. Der Signalgeber 20 gibt ein der weiteren Lage B des Betätigungshebels 12 entsprechendes Signal 39 an die Ansteuervorrichtung 50 ab. Die Ansteuervorrichtung 50 wertet das Signal 39 des Signalgebers 20 aus, um die aktuelle weitere Lage B des Betätigungshebels 12 zu erkennen. Ist der Betätigungshebel 12 durch einen Benutzer aus der ersten Lage A in eine weitere Lage B (erste Zwischenlage II oder erste Endlage III) verschwenkt, erkennt die Ansteuervorrichtung 50 die weitere Lage B des Betätigungshebels 12. Ist eine vorgegebene weitere Lage B erkannt, erzeugt die Ansteuervorrichtung 50 ein Startsignal 51 zur Inbetriebnahme des Elektromotors 40 und zum Starten des Verbrennungsmotors 3.

Die Ansteuervorrichtung 50 ist vorteilhaft so ausgelegt, dass nicht nur das Signal 39 des Signalgebers 20 zur Inbetriebnahme des Elektromotors 40 und zum Starten des Verbrennungsmotors 3 genutzt ist; ergänzend kann ein vorgegebener Betriebszustand des Arbeitsgerätes berücksichtigt werden, welcher z. B. über eine Erfassungseinrichtung 60 festgestellt und über eine Signalleitung 61 der Ansteuervorrichtung 50 übermittelt wird. Ein derartiger vorgegebener Betriebszustand des Arbeitsgerätes kann z. B. ein festgestellter Betriebszustand des Verbrennungsmotors 3 sein. Ein derartiger Betriebszustand kann ein erfolgreicher, abgeschlossener erster Start des Verbrennungsmotors 3 sein. Zu erfassen wäre ein erfolgreicher Start des Verbrennungsmotors z. B. durch ein Verweilen des Verbrennungsmotors für eine vorgegebene Zeit z. B. im Leerlaufbetrieb. Hierzu kann ein Zeitglied zweckmäßig sein.

Wird von der Erfassungseinrichtung 60 ein vorgegebener Betriebszustand des Arbeitsgerätes bzw. des Verbrennungsmotors 3 festgestellt, gibt die Erfassungseinrichtung 60 über die Signalleitung 61 ein entsprechendes Signal an die Ansteuervorrichtung 50 ab. Der Elektromotor 40 zum Starten des Verbrennungsmotors 3 wird aber nur dann freigeschaltet, wenn ein Signal 39 des Signalgebers 20 zusätzlich eine der weiteren Lagen B des Betätigungshebels 12 meldet. Zweckmäßig ist hierzu eine elektronisch verriegelte Sperrvorrichtung 52 vorgesehen, die z. B. als logisches UND-Glied 53 ausgebildet sein kann. Ein Startsignal 51 wird nur dann abgegeben, wenn an den Eingängen des UND-Gliedes 53 zugleich ein vorgegebenes Signal 39 des Signalgebers 20 und ein einen vorgegebenen Betriebszustand anzeigendes Signal der Erfassungseinrichtung 60 anliegt.

Neben dem Signal 39 des Signalgebers 20 und dem ergänzenden Signal der Erfassungseinrichtung 60 können zum Zulassen eines Startens des Verbrennungsmotors 3 auch die Stellungen der Gashebelsperre 18 über den Stellungssensor 28 und die Stellung des Gashebels 17 über den Stellungsensor 27 erfasst werden. Alternative einfließende Signale bzw. Betriebszustände können auch der Füllstand des Tanks oder ähnliche Einflussfaktoren sein.

Für einen Start des Verbrennungsmotors 3 kann vorgesehen sein, dass die Ansteuervorrichtung 50 nur dann ein Startsignal 51 an den Anlasserschalter 41 gibt, wenn z. B. die Gashebelsperre 18 gedrückt ist. Dies wird über den Stellungssensor 28 abgefragt, der der Gashebelsperre 18 zugeordnet ist und dessen Ausgangssignal über eine Signalleitung 58 der Ansteuervorrichtung 50 gemeldet wird. Vorteilhaft kann das Signal des Stellungssensors 28 der Gashebelsperre 18 derart mit dem Signal 39 des Signalgebers 20 des Betätigungshebels 12 verknüpft werden, dass nur dann ein elektrisches Anlassen des Verbrennungsmotors 3 zugelassen wird, wenn die Gashebelsperre 18 gedrückt ist und somit die Anwesenheit einer Hand des Benutzers am hinteren Handgriff 70 gesichert ist.

Alternativ oder ergänzend kann auch der Stellungssensor 27 am Gashebel 17 vorgesehen sein, dessen Signal über die Signalleitung 57 der Ansteuervorrichtung 50 zugeführt ist. So wäre ein elektrisches Anlassen des Verbrennungsmotors 3 nur dann zugelassen, wenn der Stellungssensor 27 des Gashebels 17 meldet, dass der Gashebel 17 in der Leerlaufposition ist.

Ein Starten des Verbrennungsmotors 3 ist vorteilhaft nur dann möglich, wenn eine dem Gashebel 17 des Verbrennungsmotors 3 zugeordnete Gashebelsperre 18 vom Benutzer gedrückt ist und der Betätigungshebel 12 durch den Benutzer in eine weitere Lage B gedrückt ist, z. B. als Taster durch Antippen durch den Benutzer. Der Wiederstart wird vorteilhaft nur dann zugelassen, wenn beide Handlungen des Benutzers insbesondere innerhalb einer vorgegebenen Zeit oder eines vorgegebenen Zeitfensters ausgeführt werden. Die Hand des Benutzers an der Gashebelsperre 18 und die weitere Hand des Benutzers zum Tasten des Betätigungshebels 12 stellen im weiteren Sinne eine Zweihandsicherung dar. Der Start des Verbrennungsmotors 3 ist nur möglich, wenn beide Hände des Benutzers an vorgegebenen Stellen des Arbeitsgerätes detektiert werden. Erst dann wird die Ansteuervorrichtung 50 den Elektromotor 40 zum Starten des Verbrennungsmotors 3 in Betrieb nehmen.

Ein Wiederstarten des Verbrennungsmotors 3 kann auch dadurch ausgelöst werden, wenn der Gashebel 17 des Verbrennungsmotors 3 vom Benutzer gedrückt wird und der Betätigungshebel 12 durch den Benutzer in eine weitere Lage B gebracht wird, z. B. nach Art eines Tasters durch Antippen durch den Benutzer. Der Wiederstart wird vorteilhaft nur dann zugelassen, wenn beide Handlungen des Benutzers insbesondere innerhalb einer vorgegebenen Zeit oder eines vorgegebenen Zeitfensters ausgeführt werden. Die Hand des Benutzers am Gashebel 17 und die weitere Hand des Benutzers zum Tasten des Betätigungshebels 12 stellen im weiteren Sinne eine Zweihandsicherung dar. Der Start des Verbrennungsmotors 3 ist nur möglich, wenn beide Hände des Benutzers an vorgegebenen Stellen des Arbeitsgerätes detektiert werden. Erst dann wird die Ansteuervorrichtung 50 den Elektromotor 40 zum Starten des Verbrennungsmotors 3 in Betrieb nehmen.

In weiterer Ausgestaltung der Erfindung ist die Erfassungseinrichtung 60 vorgesehen, um ein elektrisches Anlassen des Verbrennungsmotors 3 dann und nur dann zuzulassen, wenn der Verbrennungsmotor 3 wiedergestartet wird. Dies bedeutet, dass der Verbrennungsmotor 3 beim Erststart zunächst über den Seilzugstarter 71 (Fig. 1) von Hand zu starten ist und die Ansteuervorrichtung 50 dann und nur dann wirksam wird, wenn ein Wiederstart des Verbrennungsmotors 3 vorgesehen ist. Der Erststart und/oder ein Wiederstart können vorteilhaft auch über einen Starttaster oder einen Zündschlüssel erfolgen. Es kann zweckmäßig sein, die Möglichkeit eines Wiederstarts über die elektrische Startvorrichtung 66 zeitlich auf eine Zeitspanne nach Abstellen des Verbrennungsmotors zu beschränken; eine derartige Zeitspanne könnte z. B. 3 min oder 5 min betragen. Ein diese Zeitspanne überwachendes Zeitglied 55 könnte zweckmäßig in der Ansteuervorrichtung 50 integriert sein.

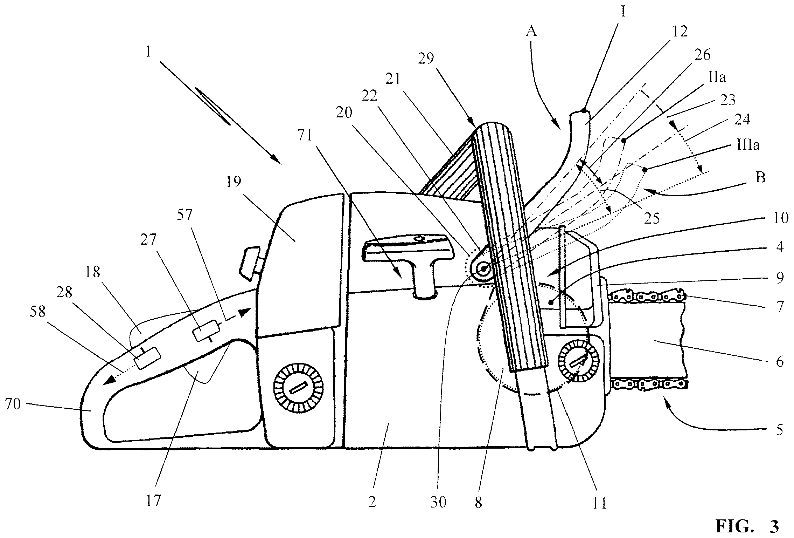

Das Ausführungsbeispiel nach Fig. 3 entspricht im Grundaufbau dem nach Fig. 1, weshalb für gleiche Teile gleiche Bezugszeichen verwendet sind.

Wird in Fig. 3 der Betätigungshebel 12 in Pfeilrichtung 23 in Richtung auf den Schalldämpfer 9 verschwenkt, so kann bei Durchlaufen eines Schwenkweges 26 um die Schwenkachse 30 ein Auslösen der vorgespannten Bremsvorrichtung 10 bei Erreichen der zweiten Zwischenlage IIa (strichpunktiert dargestellt) erfolgen. Über die zweite Zwischenlage IIa hinaus kann der Betätigungshebel 12 in Richtung auf den Schalldämpfer 9 in Pfeilrichtung 24 in eine zweite Endlage IIIa (punktiert dargestellt) verschwenkt werden. Beim Durchlaufen des Schwenkweges 25 aus der ersten Lage A in die zweite Endlage IIIa wird ein Schwenkweg 25 durchfahren.

Zum Auslösen der gespannten Bremsvorrichtung 10 muss der Betätigungshebel 12 somit in Richtung auf den Abgasschalldämpfer 9 im Uhrzeigersinn um die Schwenkachse 30 bewegt werden. Mit dem Verschwenken wird der Betätigungshebel 12 aus einer ersten Lage A in eine weitere Lage B überführt. Entsprechend dem Ausführungsbeispiel nach Fig. 1 kann der Betätigungshebel 12 aus der ersten Lage A über eine zweite Zwischenlage IIa bis in eine zweite Endlage IIIa (weitere Lagen B) verschwenkt werden. In Fig. 3 ist das Bremsband 11 in Bremsstellung in Anlage an der Kupplungstrommel 8 dargestellt; die Bremsvorrichtung 10 ist aktiv.

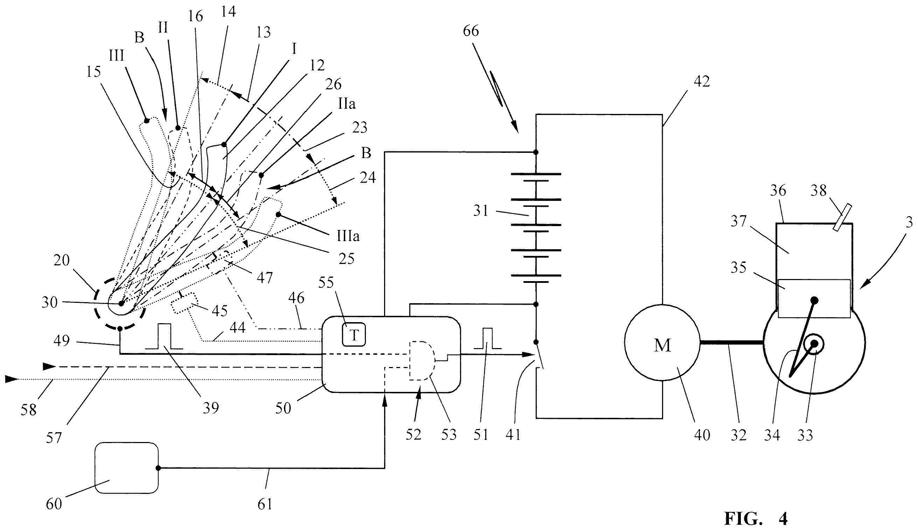

Der am Ende 22 des Betätigungshebels 12 angeordnete Sensor 20 erkennt auch diese Schwenkbewegungen. Wird der Betätigungshebel 12 aus der ersten Lage A um den Stellweg 26 in Pfeilrichtung 23 verschwenkt, ist die zweite Zwischenlage IIa erreicht. Wird der Betätigungshebel 12 um den maximalen Stellweg 25 in Pfeilrichtung 24 verschwenkt, ist die zweite Endlage IIIa erreicht. Der Signalgeber 20 kann ein dem Stellweg 25 bzw. 26 proportionales Ausgangssignal über die Signalleitung (Fig. 4) an die Ansteuervorrichtung 50 abgeben, so dass die zweite Zwischenlage IIa ebenso wie die zweite Endlage IIIa erkannt werden können.

In Fig. 4 ist ein Prinzipschaltbild zum Starten des Verbrennungsmotors 3 in einer Darstellung gemäß Fig. 2 wiedergegeben. Gleiche Teile sind mit gleichen Bezugszeichen versehen; auch die Funktion ist gleichwirkend.

In Fig. 4 sind die weiteren Lagen B des Betätigungshebels 12 bei einer Schwenkbewegung sowohl entgegen dem Uhrzeigersinn - erste Zwischenlage I, erste Endlage II - als auch bei einer Schwenkbewegung im Uhrzeigersinn - zweite Zwischenlage IIa, zweite Endlage IIIa - wiedergegeben. Vorteilhaft gibt der Signalgeber 20 in Abhängigkeit der Drehbewegung im oder entgegen dem Uhrzeigersinn ein negatives oder positives Ausgangssignal ab. Die Ansteuervorrichtung 50 kann somit die Größe und das Vorzeichen des Signals 39 auswerten und so die weiteren Lagen B, nämlich die erste Zwischenlage I, die erste Endlage II, die zweite Zwischenlage IIa und die zweite Endlage IIIa des Betätigungshebels 12 erkennen. Ist das Signal 39 des Signalgebers 20 z. B. positiv, liegt eine Schwenkbewegung in Pfeilrichtung 13 bzw. 14 vor. Ist das Signal 39 des Signalgebers 20 z. B. negativ, liegt eine Schwenkbewegung in Pfeilrichtung 23 bzw. 24 vor. Es können abhängig von der Größe des Signals 39 die Zwischenlage und die Endlage erkannt werden.

Zur Erkennung einer weiteren Lage kann ein Stellungssensor vorgesehen sein. Wie Fig. 4 zeigt, ist zur Erkennung der zweiten Endlage IIIa des Betätigungshebels 12 ein Stellungssensor 45 angeordnet. Entsprechend kann zur Erkennung der zweiten Zwischenlage IIa ein Stellungssensor 47 angeordnet sein. Jeder Stellungssensor 45, 47 ist über eine Signalleitung 44, 46 mit der Ansteuervorrichtung 50 der Startvorrichtung 66 verbunden, die die Ausgangssignale der Stellungssensoren 45, 47 auswertet.

Die Endlagen III und IIIa sind vorteilhaft Tastpositionen. Wird der Betätigungshebel 12 in eine der Endlagen III und IIIa verschwenkt, kehrt er selbstständig in die erste Lage A zurück. Die Rückstellung erfolgt vorteilhaft durch eine am Betätigungshebel 12 angreifende Rückstellfeder.

Die erste Lage A kann einer Ausgangsstellung I des Betätigungshebels 12 entsprechen. Diese Ausgangsstellung I des Betätigungshebels 12 kann auch als Ruhelage bezeichnet werden, in die der Betätigungshebel 12 nach einer durch den Benutzer bewirkten Auslenkung des Betätigungshebels 12 selbsttätig zurückschwenkt, wenn auf ihn keine Kräfte mehr wirken. Diese Ausgangslage I des Betätigungshebels 12 kann bei ausgelöster Bremsvorrichtung 10 eine andere Stellung haben als in Bereitschaftsstellung der Bremseinrichtung 10, in der die Bremsvorrichtung 10 gespannt ist. Für die Funktion ist die tatsächliche Winkelstellung des Betätigungshebels 12 in der Ausgangslage I ohne Bedeutung. Es wird daher einheitlich von einer ersten Lage A gesprochen.

Die erfindungsgemäße Startvorrichtung für einen Erststart oder Wiederstart eines Verbrennungsmotors 3 kann beispielhaft nach den folgenden Kriterien arbeiten:
1. Die Bremsvorrichtung 10 ist eingelegt; das Bremsband 11 liegt an der Kupplungstrommel 8 an. Das Werkzeug 5 steht. Der Betätigungshebels 12 befindet sich in der ersten Lage A.
   a) Zum Starten des Verbrennungsmotors 3 wird der Betätigungshebel 12 über die zweite Zwischenlage IIa (Auslösestellung der Bremsvorrichtung 10) in Richtung auf die zweite Endlage IIIa in Pfeilrichtung 23 in Richtung auf den Schalldämpfer 9 verschwenkt. Vorzugsweise beim Überschreiten der zweiten Zwischenlage IIa, insbesondere bei Erreichen der Endlage IIIa wird die Ansteuervorrichtung 50 aufgrund des dann anstehenden Signals 39 des Signalgebers 20 den Anlasserschalter 41 schließen und den Elektromotor 40 zum Anlassen des Verbrennungsmotors 3 in Betrieb nehmen.
      Da bei einer Schwenkbewegung des Betätigungshebels 12 im Uhrzeigersinn in Richtung auf den Schalldämpfer 9 die Bremsvorrichtung 10 auslöst und die Bandbremse 11 angelegt ist, muss für die Aufnahme einer Arbeit mit dem Arbeitsgerät zunächst der Betätigungshebel 12 zum Lösen der Bremsvorrichtung 10 in Richtung auf den oberen Griffabschnitt 21 bzw. in Richtung auf den Luftfilter 19 in zumindest die erste Zwischenlage II verschwenkt werden.
      Es kann zweckmäßig vorgesehen sein, dass der Betätigungshebel 12 für eine vorgegebene Zeitdauer in der zweiten Endlage IIIa gehalten werden muss, um so ein deutliches Startsignal durch den Bediener zu bewirken. Ohne den Betätigungshebel 12 zu halten, verschwenkt der Betätigungshebel 12 zurück in die erste Lage A. Besonders bevorzugt werden vor dem Start noch andere Signale durch die Ansteuervorrichtung 50 abgefragt, beispielsweise eine betätigte Gashebelsperre 18 und/oder ein betätigter Gashebel 17.
   b) Zum Wiederstarten des Verbrennungsmotors 3 wird bei eingelegter Bremsvorrichtung 10 der Betätigungshebel 12 in die erste Zwischenlage II in Richtung auf den oberen Griffabschnitt 21 bzw. in Richtung auf den Luftfilter 19 verschwenkt. War die Bremsvorrichtung 10 aktiv, wird durch die Schwenkbewegung des Betätigungshebels 12 die Bremsvorrichtung 10 gelöst. Bei gelöster Bremseinrichtung 10 liegt das Bremsband 11 mit einem Abstand a zur Kupplungstrommel 8. Ein Weiterschwenken über die erste Zwischenlage II hinaus in Richtung auf die erste Endlage III wird von der Ansteuervorrichtung 50 erkannt und als Startwunsch erkannt. Die Ansteuervorrichtung 50 wird den Elektromotor 40 durch Schließen des Anlasserschalters 41 in Betrieb nehmen, um den Verbrennungsmotor 3 zu starten. Vorzugsweise erfolgt ein Start erst dann, wenn der Betätigungshebel 12 an einem Endanschlag in der ersten Endlage III anliegt. Besonders bevorzugt erfolgt ein Start erst dann, wenn der Betätigungshebel 12 über eine vorgegebene Zeitdauer von z. B. 4 Sekunden in der ersten Endlage III gehalten wird. Es kann zweckmäßig sein, einen Endanschlag für den Betätigungshebel 12 vorzusehen und das Anschlagen an dem Endanschlag zu erfassen.
2. Die Bremsvorrichtung 10 ist gelöst; das Bremsband 11 liegt mit einem Abstand a zu der Kupplungstrommel 8. Der Betätigungshebel 12 liegt in einer ersten Lage A.
   a) Die Bremsvorrichtung 10 wird durch Bewegen des Betätigungshebels 12 in Richtung auf den Schalldämpfer 9 bei Erreichen der zweiten Zwischenläge IIa angelegt. Das heißt, das Bremsband 11 wird von einem gelösten Zustand in einen an die Kupplungstrommel 8 angelegten Zustand bewegt. Durch Weiterverschwenken des Betätigungshebels 12 in Richtung auf die zweite Endlage IIIa wird durch Auswertung des Signals 39 des Signalgebers 20 die Ansteuervorrichtung 50 den Anlasserschalter 41 schließen und den Elektromotor 40 in Betrieb nehmen, um den Verbrennungsmotor 3 zu starten. Bevorzugt wird die Ansteuervorrichtung 50 den Anlasserschalter schließen, wenn der Betätigungshebel 12 über eine vorgegebene Zeitdauer von z .B. 4 Sekunden in der zweiten Endlage IIIa gehalten wird. Es kann zweckmäßig sein, einen Endanschlag für den Betätigungshebel 12 vorzusehen und das Anschlagen an dem Endanschlag zu erfassen.
      Für einen Betrieb mit dem Arbeitsgerät wird dann der Betätigungshebel 12 zumindest in die zweite Zwischenlage II in Richtung auf den Luftfilter 19 verschwenkt, wodurch die Bremsvorrichtung 10 gelöst wird.
   b) Der Verbrennungsmotor 3 kann bei Bedarf auch mit nicht eingelegter Bremsvorrichtung 10 gestartet werden, wenn der Betätigungshebel 12 in Richtung auf den Griffbügel 29 bzw. in Richtung auf den Luftfilter 19 in die erste Zwischenlage II verschwenkt wird. Es kann auch vorteilhaft sein, den Wiederstart des Verbrennungsmotors 3 durch Einschalten des elektrischen Elektromotors 40 erst dann einzuleiten, wenn der Betätigungshebel 12 in der ersten Endlage III nahe dem Griffbügel 29 liegt.
   c) Vorteilhaft kann die Ansteuervorrichtung 50 den Elektromotor 40 zum Starten des Verbrennungsmotors 3 auch dann in Betrieb nehmen, wenn der Benutzer - bei offener, d. h. gelöster Bremsvorrichtung 10 - den Betätigungshebel 12 durch Tasten oder Verschwenken in Richtung auf den Schalldämpfer 9 bewegt. Ein Starten des Verbrennungsmotors 3 ist vorteilhaft nur dann möglich, wenn die Gashebelsperre 18 und/oder der Gashebel 17 gedrückt wurde.
      Alternativ kann vorgesehen sein, dass nur ein Niederdrücken der Gashebelsperre 18 und/oder des Gashebels 17 das Starten des Verbrennungsmotors 3 auslösen.
      Insbesondere kann vorteilhaft sein, für die Funktion des Wiederstarts ein Zeitglied vorzusehen, welches in der Ansteuervorrichtung 50 integriert sein kann. Über das Zeitglied kann die Bedingung verknüpft werden, dass der Gashebel 17 und/oder die Gashebelsperre 18 für eine vorgegebene Zeitdauer gedrückt werden müssen.

## Patentansprüche

1. Motorkettensäge mit einem Verbrennungsmotor, mit einer elektrischen Startvorrichtung (10) zum Starten des Verbrennungsmotors (3) zum Antrieb eines Werkzeugs (5), wobei die Startvorrichtung (10) einen Elektromotor (40) mit einer Ansteuervorrichtung (50) umfasst, die den Elektromotor (40) in Betrieb nimmt und den Verbrennungsmotor (3) startet, und mit einer Bremsvorrichtung (10) zum Stillsetzen des Werkzeugs (5), wobei die Bremsvorrichtung (10) über einen Betätigungshebel (12) zu bedienen ist, wobei der Betätigungshebel (12) ein Handschutz ist, und der Betätigungshebel (12) aus einer ersten Lage (A) in mindestens eine weitere Lage (B) zu bewegen ist, wobei der Betätigungshebel (12) infolge der Bewegung aus der ersten Lage (A) in die weitere Lage (B) einen Signalgeber (20) betätigt, und wobei der Signalgeber (20) ein Signal (39) an die Ansteuervorrichtung (50) abgibt, **dadurch gekennzeichnet, dass** die Ansteuervorrichtung (50) ein Startsignal (51) zur Inbetriebnahme des Elektromotors (40) und zum Starten des Verbrennungsmotors (3) erzeugt, wenn die vorgegebene weitere Lage (B) erkannt ist-,
dass auf das Signal (39) des Signalgebers (20) die Ansteuervorrichtung (50) den Elektromotor (40) zum Starten des Verbrennungsmotors (3) nur dann in Betrieb nimmt, wenn ein vorgegebener Betriebszustand der Motorkettensäge erkannt ist und dass der vorgegebene Betriebszustand ein erfolgreicher, abgeschlossener, erster Start des Verbrennungsmotors (3) ist.

2. Motorkettensäge nach Anspruch 1,
**dadurch gekennzeichnet, dass** die weitere Lage (B) einer ersten oder zweiten Zwischenlage (II, IIa) des Betätigungshebels (12) entspricht, in der der Betätigungshebel (12) um einen vorgegebenen Stellweg (16, 26) aus der ersten Lage (A) ausgelenkt ist.

3. Motorkettensäge nach Anspruch 1,
**dadurch gekennzeichnet, dass** die weitere Lage (B) einer ersten oder zweiten Endlage (III, IIIa) des Betätigungshebels (12) entspricht, in der der Betätigungshebel (12) um einen maximalen Stellweg (15, 25) aus der ersten Lage (A) ausgelenkt ist.

4. Motorkettensäge nach Anspruch 2 oder 3,
**dadurch gekennzeichnet, dass** der Signalgeber (20) am Ende des Stellwegs (15, 16, 25, 26) das Signal (39) abgibt.

5. Motorkettensäge nach einem der Ansprüche 1 bis 4,
**dadurch gekennzeichnet, dass** die erste Lage (A) einer Ausgangslage (I) des Betätigungshebels (12) entspricht.

6. Motorkettensäge nach Anspruch 2,
**dadurch gekennzeichnet, dass** in der ersten Zwischenlage (II) des Betätigungshebels (12) die Bremsvorrichtung (10) gelöst ist.

7. Motorkettensäge nach Anspruch 2,
**dadurch gekennzeichnet, dass** in der zweiten Zwischenlage (IIa) des Betätigungshebels (12) die Bremsvorrichtung (10) angelegt ist.

8. Motorkettensäge nach Anspruch 1,
**dadurch gekennzeichnet, dass** das Signal (39) des Signalgebers (20) eine elektronisch verriegelte Sperrvorrichtung (52) freischaltet.

9. Motorkettensäge nach Anspruch 1,
**dadurch gekennzeichnet, dass** die Ansteuervorrichtung (50) den Elektromotor (40) zum Starten des Verbrennungsmotors (3) dann in Betrieb nimmt, wenn eine einem Gashebel (17) des Verbrennungsmotors (3) zugeordnete Gashebelsperre (18) gedrückt und der Betätigungshebel (12) in eine weitere Lage (B) verstellt ist.

10. Motorkettensäge nach Anspruch 1,
**dadurch gekennzeichnet, dass** die Ansteuervorrichtung (50) den Elektromotor (40) zum Starten des Verbrennungsmotors (3) dann in Betrieb nimmt, wenn ein Gashebel (17) des Verbrennungsmotors (3) gedrückt und der Betätigungshebel (12) in eine weitere Lage (B) verstellt ist.

## Claims

1. Motorised chain saw, comprising an internal combustion engine and an electric starting device (10) for starting the internal combustion engine (3) in order to drive a tool (5), wherein the starting device (10) comprises an electric motor (40) with an activation device (50), which activates the electric motor (40) and starts the internal combustion engine (3), and further comprising a braking device (10) for shutting down the tool (5), wherein the braking device (10) is operated by way of an actuating lever (12), wherein the actuating lever (12) is a hand guard, and the actuating lever (12) can be moved from a first position (A) into at least one further position (B), wherein the actuating lever (12) actuates, as a result of the movement from the first position (A) into the further position (B), a signal generator (20), and wherein the signal generator (20) emits a signal (39) to the activation device (50), **characterised in that** the activation device (50) generates a start signal (51) for activating the electric motor (40) and starting the internal combustion engine (3) if the preset further position (B) is detected,
**in that** the activation device (50) only activates the electric motor (40) for starting the internal combustion engine (3) in response to the signal (39) of the signal generator (20) if a preset operating state of the working implement is detected, and **in that** the preset operating state is a successfully completed first start of the internal combustion engine (3)

2. Motorised chain saw according to claim 1,
**characterised in that** the further position (B) corresponds to a first or second intermediate position (II, IIa) of the actuating lever (12), in which the actuating lever (12) is deflected from the first position (A) by a preset travel (16, 26).

3. Motorised chain saw according to claim 1,
**characterised in that** the further position (B) corresponds to a first or second end position (III, IIIa) of the actuating lever (12), in which the actuating lever (12) is deflected from the first position (A) by a maximum travel (15, 25).

4. Motorised chain saw according to claim 2 or 3,
**characterised in that** the signal generator (20) emits the signal (39) at the end of the travel (15, 16, 25, 26).

5. Motorised chain saw according to any of claims 1 to 4,
**characterised in that** the first position (A) corresponds to a starting position (I) of the actuating lever (12).

6. Motorised chain saw according to claim 2,
**characterised in that** the braking device (10) is released in the first intermediate position (II) of the actuating lever (12).

7. Motorised chain saw according to claim 2,
**characterised in that** the braking device (10) is applied in the second intermediate position (IIa) of the actuating lever (12).

8. Motorised chain saw according to claim 1,
**characterised in that** the signal (39) of the signal generator (20) releases an electronically locked blocking device (52).

9. Motorised chain saw according to claim 1,
**characterised in that** the activation device (50) activates the electric motor (40) for starting the internal combustion engine (3) if an accelerator locking device (18) assigned to an accelerator (17) of the internal combustion engine (3) is pressed and the actuating lever (12) is moved into a further position (B).

10. Motorised chain saw Motorised chain saw according to claim 1,
**characterised in that** the activation device (50) activates the electric motor (40) for starting the internal combustion engine (3) if an accelerator (17) of the internal combustion engine (3) is pressed and the actuating lever (12) is moved into a further position (B).

## Revendications

1. Tronçonneuse avec un moteur à combustion interne, avec un dispositif de démarrage électrique (10) pour démarrer le moteur à combustion interne (3) pour entraîner un outil (5), dans laquelle le dispositif de démarrage (10) comprend un moteur électrique (40) avec un dispositif de commande (50) qui met en marche le moteur électrique (40) et démarre le moteur à combustion interne (3), et avec un dispositif de freinage (10) pour arrêter l'outil (5), dans laquelle le dispositif de freinage (10) peut être manoeuvré par une manette d'actionnement (12), dans laquelle la manette d'actionnement (12) est un pare-main, et la manette d'actionnement (12) peut être déplacée d'une première position (A) jusqu'à au moins une autre position (B), dans laquelle la manette d'actionnement (12) actionne à la suite du déplacement de la première position (A) jusqu'à l'autre position (B) un émetteur de signaux (20), et dans laquelle l'émetteur de signaux (20) émet un signal (39) au dispositif de commande (50),
**caractérisée en ce que** le dispositif de commande (50) génère un signal de démarrage (51) pour mettre en marche le moteur électrique (40) et démarrer le moteur à combustion interne (3) si l'autre position (B) prédéfinie est détectée, qu'en réponse au signal (39) de l'émetteur de signaux (20), le dispositif de commande (50) ne met en marche le moteur électrique (40) pour démarrer le moteur à combustion interne (3) que si un état de marche prédéfini de l'appareil de travail est détecté et si l'état de marche prédéfini est un premier démarrage réussi achevé du moteur à combustion interne (3).

2. Tronçonneuse avec un moteur selon la revendication 1,
**caractérisé en ce que** l'autre position (B) correspond à une première ou deuxième position intermédiaire (II, IIa) de la manette d'actionnement (12), dans laquelle la manette d'actionnement (12) est déviée de la première position (A) suivant une course de réglage prédéfinie (16, 26).

3. Tronçonneuse avec un moteur selon la revendication 1,
**caractérisé en ce que** l'autre position (B) correspond à une première ou deuxième position de fin de course (III, IIIa) de la manette d'actionnement (12), dans laquelle la manette d'actionnement (12) est déviée de la première position (A) suivant une course de réglage maximale (15, 25).

4. Tronçonneuse avec un moteur selon la revendication 2 ou 3,
**caractérisé en ce que** l'émetteur de signaux (20), à la fin de la course de réglage (15, 16, 25, 26), émet le signal (39).

5. Tronçonneuse avec un moteur selon l'une des revendications 1 à 4,
**caractérisé en ce que** la première position (A) correspond à une position de départ (I) de la manette d'actionnement (12)

6. Tronçonneuse avec un moteur selon la revendication 2,
**caractérisé en ce que** dans la première position intermédiaire (II) de la manette d'actionnement (12), le dispositif de freinage (10) est desserré.

7. Tronçonneuse avec un moteur selon la revendication 2,
**caractérisé en ce que** dans la deuxième position intermédiaire (IIa) de la manette d'actionnement (12), le dispositif de freinage (10) est serré.

8. Tronçonneuse avec un moteur selon la revendication 1,
**caractérisé en ce que** le signal (39) de l'émetteur de signaux (20) débloque un dispositif de blocage (52) verrouillé électroniquement.

9. Tronçonneuse avec un moteur selon la revendication 1,
**caractérisé en ce que** le dispositif de commande (50) met en marche le moteur électrique (40) pour démarrer le moteur à combustion interne (3) si un dispositif de blocage de manette d'accélérateur (18) associé à une manette d'accélérateur (17) du moteur à combustion interne (3) est poussé et que la manette d'actionnement (12) est déplacée jusqu'à une autre position (B).

10. Tronçonneuse avec un moteur selon la revendication 1,
**caractérisé en ce que** le dispositif de commande (50) met en marche le moteur électrique (40) pour démarrer le moteur à combustion interne (3) si une manette d'accélérateur (17) du moteur à combustion interne (3) est poussée et que la manette d'actionnement (12) est déplacée jusqu'à une autre position (B).
